# EUROPÄISCHE PATENTSCHRIFT

(11) **EP 2 917 622 B1**
(45) Veröffentlichungstag und Bekanntmachung des Hinweises auf die Patenterteilung: **10.04.2019**
(21) Anmeldenummer: 13753892.2
(22) Anmeldetag: 03.09.2013
(51) Int. Cl.: F16K 27/04, F16K 11/07

(54) **STRÖMUNGSGEHÄUSE FÜR EIN ÖLVENTIL**
FLOW CASING FOR AN OIL VALVE
CORPS D'ÉCOULEMENT POUR UNE SOUPAPE D'HUILE

(30) Priorität: 09.11.2012 DE 102012110742
(43) Veröffentlichungstag der Anmeldung: 16.09.2015
(73) Patentinhaber: Pierburg GmbH, 41460 Neuss (DE)
(72) Erfinder: LAPPAN, Rolf, 50733 Köln (DE); SADOWSKI, Christoph, 45549 Sprockhövel (DE); YILMAZ, Turgut, 50739 Köln (DE); ROMANOWSKI, Lukas, 49090 Osnabrück (DE)
(74) Vertreter: Patentanwälte ter Smitten Eberlein-Van Hoof Rütten Partnerschaftsgesellschaft mbB
(86) Internationale Anmeldenummer: PCT/EP2013/068174
(87) Internationale Veröffentlichungsnummer: WO 2014/072095

(56) Entgegenhaltungen:
- DE-A1- 2 609 406
- DE-A1- 4 434 142
- DE-A1- 10 259 108
- FR-A5- 2 226 886
- US-A- 4 491 155
- Eriks: "ERIKS - Sealing Elements - Technical Handbook O-rings - Designing With Rubber", , 5. Februar 2010 (2010-02-05), Seiten 22-31, XP055087751, Internet Gefunden im Internet: URL:http://o-ring.info/en/o-ring/Oring-Han dbook/ERIKS_SealingElements_TechnicalHandb ook_O-rings_DesigningWithRubber.pdf [gefunden am 2013-11-12]

## Beschreibung

Die Erfindung betrifft ein Ölventil-Strömungsgehäuse für einen Ölkreislauf einer Verbrennungskraftmaschine mit einem Aufnahmegehäuse, in dem ein Ventilgehäuse in einer Aufnahmebohrung des Aufnahmegehäuses angeordnet ist, zumindest zwei fluidisch verbindbare Anschlussstutzen, die im Aufnahmegehäuse ausgebildet sind und die fluidisch mit einer korrespondierenden Anzahl Bohrungen des Ventilgehäuses verbunden sind, einer Umfangsfläche am Ventilgehäuse, welche axial zwischen den Bohrungen angeordnet ist und an der eine Nut ausgebildet ist und zumindest einem Dichtring, welcher in der Nut an der Umfangsfläche angeordnet ist.

Derartige Strömungsgehäuse werden insbesondere für Öldruckregelventile für Ölkreisläufe von Verbrennungskraftmaschinen genutzt, die aus einer Aktoreinheit mit einem elektromagnetischen Kreis bestehen, der einen translatorisch bewegbaren Anker, einen Kern, eine bestrombare Spule, die auf einem Spulenträger angeordnet ist und Flussleiteinrichtungen aufweist. Diese Aktoreinheiten dienen zur Betätigung eines Regelschiebers einer Ventileinheit, der mit dem Anker verbunden ist, so dass je nach Stellung des Ankers beziehungsweise des Regelschiebers eine Verbindung zwischen einem Regelanschluss und einem Auslassanschluss oder einem Einlassanschluss der Ventileinheit hergestellt wird. Auf diese Weise lässt sich der Druck am Regelanschluss steuern, der mit einer Steuerkammer einer variablen Ölpumpe verbunden ist. Auf diese Weise lässt sich durch Änderung des Drucks am Regelanschluss die Förderleistung der Ölpumpe regeln.

Die dabei verwendeten Ventileinheiten dieser Mehrwege-Elektromagnetventile weisen üblicherweise ein Ventilgehäuse mit einer axial verlaufenden Aufnahmebohrung auf, in der der Regelschieber axial bewegt wird. Die Regelschieber werden dabei entweder zylindrisch ausgebildet oder weisen ringförmige Abstufungen auf die als Steuerfläche dienen, um die Reibflächen und damit die zur Verstellung aufzubringende Kraft zu reduzieren. Das Ventilgehäuse weist eine oder mehrere Querbohrungen auf, die als fluidische Anschlüsse dienen.

Die Ventilgehäuse sind üblicherweise in einem Aufnahmegehäuse angeordnet, welches beispielsweise Teil der Ölpumpe sein kann. Im Aufnahmegehäuse sind korrespondierend zum Ventilgehäuse Anschlussstutzen ausgebildet, die fluidisch mit dem Ventilgehäuse verbunden sind und wie die Bohrungen des Ventilgehäuses ebenfalls zumeist am Ende des Gehäuses axial und ansonsten radial im Gehäuse ausgebildet sind.

Ein solches elektromagnetisches Öldrucksteuerventil mit einem Strömungsgehäuse ist beispielsweise aus der EP 0 451 272 A1 bekannt. Das in diesem Ventil verwendete Ventilgehäuse weist mehrere Abstufungen auf, wobei in den einzelnen Abstufungen jeweils Nuten zur Aufnahme von Dichtringen angeordnet sind. Die am Ventilgehäuse ausgebildeten Abstufungen korrespondieren zu den Abstufungen am umgebenden Aufnahmegehäuse, in dem zu den Bohrungen des Ventilgehäuses korrespondierende Anschlussstutzen ausgebildet sind. Diese Abstufungen dienen dazu, dass beim Einstecken des Ventils die Dichtungen nicht an mehreren Anschlussstutzen vorbeigeführt werden müssen, da in diesem Bereich scharfe Kanten vorhanden sind, die dazu führen können, dass eine Beschädigung des Dichtrings erfolgt, da diese in Form eines Presssitzes zum Aufnahmegehäuse ausgelegt werden müssen, um eine ausreichende Dichtigkeit sicher zu stellen.

Des Weiteren wird in der EP 1 659 319 A1 ein elektromagnetisches Schieberventil offenbart, bei dem der Außenumfang des Ventilgehäuses glatt zylindrisch ausgeführt ist. Hierbei ist es jedoch notwendig hohe Montagekräfte beim Einstecken des Ventilgehäuses aufzubringen, da dieses in Form eines Presssitzes zum Aufnahmegehäuse ausgelegt werden muss, um eine ausreichende Dichtigkeit zwischen den Anschlussstutzen sicher zu stellen und somit Leckagen zu vermeiden.

Des Weiteren ist aus der US 4,491,155 B ein Strömungsgehäuse eines Ventils bekannt, welches ein Aufnahmegehäuse mit einer Aufnahmeöffnung aufweist, in die das Ventilgehäuse gesteckt wird. Das Ventilgehäuse ist dabei mehrteilig ausgeführt, wobei in einer Nut des Ventilgehäuses ein Dichtring angeordnet ist, dessen Durchmesser korrespondierend zum Aufnahmegehäuse gewählt wird.

Es bestehen somit die Nachteile, dass entweder bei der Montage mit Zerstörungen der Dichtungen aufgrund der scharfkantigen Anschlussstutzen zu rechnen ist oder hohe Montagekräfte erforderlich sind, um eine ausreichende Leckageminimierung zu verwirklichen. Dies erhöht entweder den Herstellungsaufwand, da das Aufnahmegehäuse von innen bearbeitet werden muss, um die scharfen Kanten zu minimieren oder um bei Ausführungen ohne Dichtringe die sehr exakten notwendigen Toleranzen einzuhalten.

Daraus ergibt sich die Aufgabe, ein Ölventil-Strömungsgehäuse für einen Ölkreislauf einer Verbrennungskraftmaschine zu schaffen, bei dem der Herstellungsaufwand reduziert wird, insbesondere ein Aufnahmegehäuse verwendet werden kann, welches am Innendurchmesser nicht zusätzlich an den Anschlussstutzen bearbeitet werden muss und gleichzeitig in allen relevanten Zuständen eine möglichst geringe Leckage zwischen dem Ventilgehäuse und dem Aufnahmegehäuse aufweist. Dabei soll auch eine möglichst einfache Montage mit geringen Kräften erzielt werden.

Diese Aufgaben werden durch ein Strömungsgehäuse eines Ölventils mit den Merkmalen des Anspruchs 1 gelöst.

Dadurch, dass der Dichtring einen höheren Wärmeausdehnungskoeffizienten aufweist als das Aufnahmegehäuse, wobei bei der Verwendung in einer Verbrennungskraftmaschine bei Raumtemperatur der Dichtring eine Spiel- oder Übergangspassung zum Aufnahmegehäuse aufweist, so dass keine Verpressung entsteht, und bei Betriebstemperatur der Dichtring zum Aufnahmegehäuse verpresst ist, kann das Ventilgehäuse bei Raumtemperatur in einem Zustand in das Aufnahmegehäuse eingesteckt werden, in dem der Dichtring nicht an den scharfen Kanten des Aufnahmegehäuses hängen bleibt und somit beschädigt werden kann. Bei dieser Temperatur ist jedoch die Viskosität des Öls so hoch, dass dennoch eine ausreichende Dichtigkeit im Betrieb gegeben ist. Mit steigender Temperatur fällt zwar die Viskosität des Öls, gleichzeitig erweitert sich jedoch der Durchmesser des Dichtrings durch den größeren Wärmeausdehnungskoeffizienten, so dass erneut eine Leckage minimiert wird. So wird ein Ventil mit geringen Leckagen in allen Betriebszuständen erreicht, ohne dass das Aufnahmegehäuse im Bereich der Anschlussstutzen bearbeitet werden muss, um Beschädigungen der Dichtringe zu vermeiden oder toleranzgenaue Teile herstellen zu müssen. Es muss auch kein Presssitz zwischen den beiden Gehäusen vorgesehen werden, so dass die Montage deutlich erleichtert wird. Üblicherweise kann hier eine Spielpassung verwendet werden.

Vorzugsweise entspricht der Außendurchmesser des Dichtrings bei Raumtemperatur dem Innendurchmesser der Aufnahmebohrung des Aufnahmegehäuses, so dass keine Verpressung bei der Montage entsteht. Beschädigungen werden vermieden und eine lange Lebensdauer des Ventils sichergestellt.

Vorteilhafterweise sind die erste Bohrung und der erste Anschlussstutzen axial an einem Ende des Ventilgehäuses beziehungsweise des Aufnahmegehäuses ausgebildet und die zweite Bohrung und der zweite Anschlussstutzen verlaufen radial. Bei Verwendung als Öldruckregelventil kann so im Bereich der Axialbohrung auch die Funktion als Überdruckventil in einfacher Weise zur Verfügung gestellt werden.

In einer besonders vorteilhaften Ausführungsform sind am Aufnahmegehäuse ein dritter Anschlussstutzen und am Ventilgehäuse eine dritte Bohrung ausgebildet, wobei die dritte Bohrung und der dritte Anschlussstutzen radial verlaufen und eine fluidische Verbindung zueinander aufweisen. So kann die Ventileinheit für ein Öldruckregelventil verwendet werden, welches als Dreiwegeventil ausgebildet ist.

Vorzugsweise ist dabei an der Umfangsfläche des Ventilgehäuses eine zweite Nut zwischen der zweiten Bohrung und der dritten Bohrung ausgebildet, in der ein Dichtring angeordnet ist, der einen höheren Wärmeausdehnungskoeffizienten aufweist als das Aufnahmegehäuse. Entsprechend können auch beim Dreiwegeventil beide Dichtringe mit den Umfangsflächen an den scharfkantigen Anschlussstutzen bei der Montage vorbeigeschoben werden, ohne dass Beschädigungen auftreten. Gleichzeitig wird für beide Durchgänge ein leckagereduzierter Verschluss zwischen den Anschlussstutzen ermöglicht, welcher insbesondere bei hohen Temperaturen zu einer Minimierung der Leckage führt.

In einer Weiterbildung der Erfindung ist an der Umfangsfläche des Ventilgehäuses eine dritte Nut mit einem darin angeordneten Dichtring ausgebildet, welche an der zur ersten Bohrung entgegengesetzten Seite des Ventilgehäuses angeordnet ist. Diese mindert eine Leckage zur Außenseite der Ventileinheit. Dieser Dichtring verhindert somit einen Ölverlust der Ventileinheit zur Atmosphäre.

In dieser Ausführung ist in besonders vorteilhafter Ausgestaltung der Durchmesser des in der dritten Nut angeordneten Dichtrings bei Raumtemperatur größer als der Innendurchmesser der Aufnahmebohrung des Aufnahmegehäuses, so dass der Dichtring einen Presssitz zum Aufnahmegehäuse aufweist. Dieser dritte Dichtring muss bei der Montage nicht an den Anschlussstutzen vorbeigeschoben werden, so dass eine Beschädigung ausgeschlossen ist. Andererseits sollte bei allen auftretenden Temperaturen eine vollständige Abdichtung erreicht werden, da kein Öl nach außen treten darf. Dies wird durch den Presssitz auch bei Raumtemperatur erreicht. Eine Schädigung der Umwelt wird somit vermieden.

Vorzugsweise weist die Umfangsfläche des Ventilgehäuses drei ringförmige Erweiterungen auf, in denen die Nuten ausgebildet sind. Zur Abdichtung dienen die Dichtringe, so dass die entstehenden axial anliegenden Umfangsflächen möglichst klein sind damit zu einer Reduktion der Montagekräfte führen.

Eine besonders einfache Herstellung ergibt sich, wenn die ringförmigen Erweiterungen des Ventilgehäuses einen gleichen Außendurchmesser aufweisen und die Aufnahmebohrung des Aufnahmegehäuses einen konstanten Innendurchmesser aufweist. So kann die Ventileinheit mit einheitlichen Toleranzen als Standardbauteil in kostengünstiger Weise hergestellt werden. Des Weiteren werden Fehler bei der Montage vermieden, da in der ersten und zweiten Nut gleiche Dichtringe verwendet werden, so dass die Möglichkeit von Verwechslungen reduziert wird.

Es wird somit ein Strömungsgehäuse eines Ölventils geschaffen, bei dem durch Vermeidung von Fehlern oder Beschädigungen an den Dichtringen bei der Montage eine hohe Lebensdauer erreicht wird. Gleichzeitig wird im Betrieb eine hohe Dichtigkeit zwischen dem Aufnahmegehäuse und dem Ventilgehäuse insbesondere im üblichen Betriebsbereich über Raumtemperatur erreicht, ohne dass zu hohe Montagekräfte erforderlich sind oder zu hohe Anforderungen bei der Einhaltung von Toleranzen beachtet werden müssen. Dieses Strömungsgehäuse eignet sich somit insbesondere für Druckregelventile in Ölkreisläufen von Verbrennungskraftmaschinen.

Ein Ausführungsbeispiel eines erfindungsgemäßen Strömungsgehäuses für ein Ölventil ist in den Figuren dargestellt und wird anhand der besonderen Ausführung als Öldruckregelventil nachfolgend beschrieben.

Die Figur 1 zeigt eine Seitenansicht eines erfindungsgemäßen Strömungsgehäuses in dreidimensionaler Darstellung.

Die Figur 2 zeigt ein Diagramm, bei dem die Viskosität sowie die sich ergebende Verpressung des Dichtrings bei sich ändernder Temperatur sowie die sich daraus ergebende Leckage qualitativ dargestellt sind.

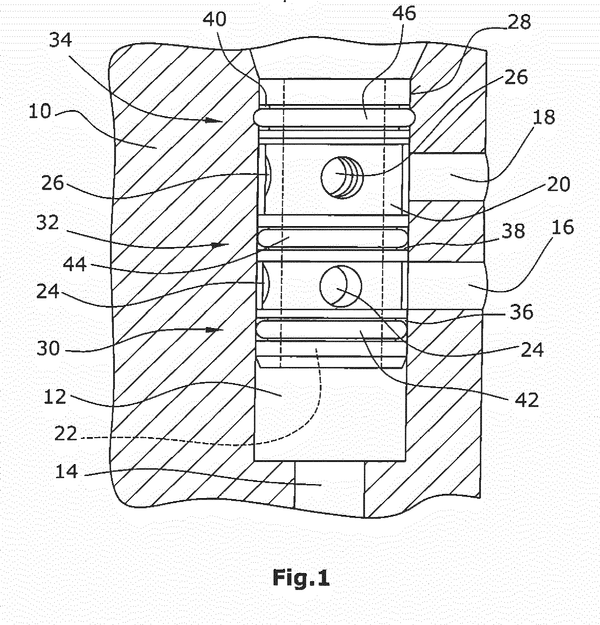

Das erfindungsgemäße, in Figur 1 dargestellte Strömungsgehäuse weist ein Aufnahmegehäuse 10 auf, welches Teil eines Ölpumpengehäuses sein kann und in welchem eine Aufnahmebohrung 12 mit konstantem Innendurchmesser ausgebildet ist. Von der Aufnahmebohrung 12 erstreckt sich in axialer Richtung ein erster Anschlussstutzen 14, der im Vergleich zur Aufnahmebohrung 12 einen verringerten Innendurchmesser aufweist. Des Weiteren sind im Aufnahmegehäuse 10 noch ein zweiter Anschlussstutzen 16 sowie ein dritter Anschlussstutzen 18 ausgebildet, welche nach radial außen verlaufend ausgebildet sind.

Während der erste Anschlussstutzen 14 bei Verwendung des Strömungsgehäuses für ein Öldruckregelventil beispielsweise als Druckstutzen verwendet werden kann, kann der zweite Anschlussstutzen 16 als Regelanschluss dienen und der dritte Anschlussstutzen 18 als Auslassanschluss verwendet werden.

In der Aufnahmebohrung 12 des Aufnahmegehäuses 10 ist ein Ventilgehäuse 20 angeordnet, welches eine erste, axial verlaufende Bohrung 22 sowie zwei radial verlaufende Querbohrungen 24, 26 aufweist. Die erste Bohrung 22 verläuft axial durch das gesamte Ventilgehäuse 20, so dass über die erste Bohrung 22 fluidische Verbindungen zwischen den drei Bohrungen und somit auch zwischen den jeweils gegenüberliegenden Anschlussstutzen besteht, welche im Verwendungsfall durch entsprechende Steuerung eines Ventilglieds geregelt geschlossen oder geöffnet werden können. Hierzu können beispielswiese an der Innenfläche der ersten Bohrung 22 Ventilsitze ausgebildet oder angeordnet werden, die sich axial zwischen den Anschlussstutzen 14, 16, 18 beziehungsweise den Bohrungen 22, 24, 26 befinden.

Eine Umfangsfläche 28 des Ventilgehäuses 20 weist drei ringförmige Vorsprünge 30, 32, 34 auf, von denen die erste Erweiterung 30 nach dem Zusammenbau axial zwischen dem ersten axialen Anschlussstutzen 14 und dem zweiten radialen Anschlussstutzen 16 angeordnet ist, die zweite Erweiterung 32 zwischen dem zweiten radialen Anschlussstutzen 16 und dem dritten radialen Anschlussstutzen 18 ausgebildet ist und die dritte ringförmige Erweiterung 34 an der zum ersten Anschlussstutzen 14 entgegengesetzten Seite des Ventilgehäuses 20 angeordnet ist. Der Außendurchmesser der ringförmigen Erweiterungen ist jeweils gleich groß und entspricht im Wesentlichen dem Innendurchmesser des Aufnahmegehäuses 10, wobei die Passung jedoch nicht als Presssitz sondern als Übergangs- oder enge Spielpassung ausgelegt ist.

Um dennoch eine ausreichende Dichtigkeit beziehungsweise Leckagefreiheit zwischen dem Aufnahmegehäuse 10 und dem Ventilgehäuse 20 herstellen zu können, weisen die ringförmigen Erweiterungen 30, 32, 34 jeweils eine Nut 36, 38, 40 auf, in der jeweils ein Dichtring 42, 44, 46 angeordnet ist, der beispielsweise ein Elastomer ist. Erfindungsgemäß weisen das Material der Dichtringe 42, 44, 46 einen Wärmeausdehnungskoeffizienten auf, der größer ist als der Wärmeausdehnungskoeffizient des Aufnahmegehäuses 10. Dieser wird dabei so gewählt, dass bei jeder Temperatur des Öls eine ausreichende Leckagefreiheit gegeben Ist.

Während der erste und der zweite Dichtring 42, 44 jeweils lediglich den Spalt zwischen dem Aufnahmegehäuse 10 und dem Ventilgehäuse 20 im Bereich zwischen den Anschlussstutzen 14, 16, 18 bei geschlossenem Ventil gegeneinander abdichten, dichtet der dritte Dichtring 46 nach außen ab. Dieser Dichtring 46 wird entsprechend mit einem Außendurchmesser ausgebildet, der geringfügig größer ist als der Innendurchmesser des Aufnahmegehäuses 10, so dass eine Verpressung zum Aufnahmegehäuse 10 entsteht und bei jeder Öltemperatur eine Leckagefreiheit erzielt wird.

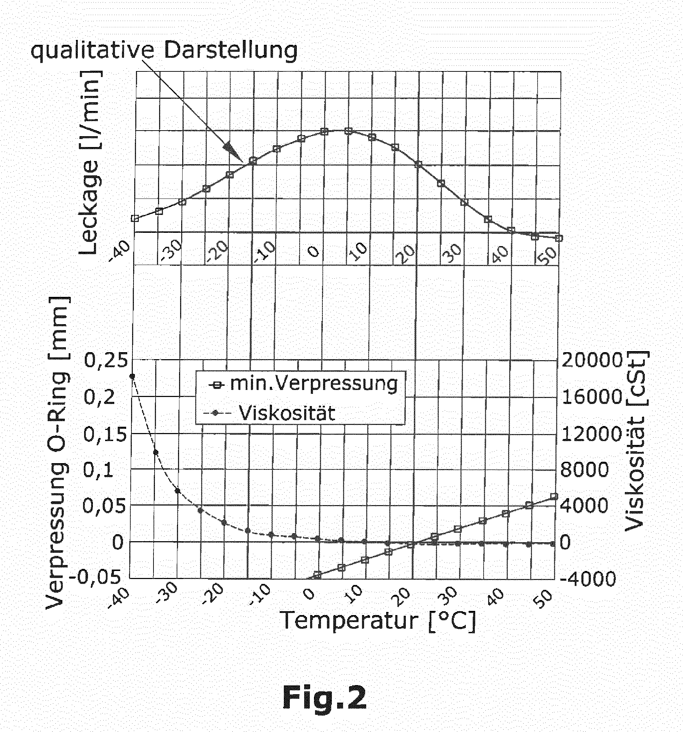

Die beiden anderen Dichtringe 42, 44 weisen bei einer Öltemperatur von etwa 20°C einen etwa gleichen Außendurchmesser auf wie der Innendurchmesser des Aufnahmegehäuses. In diesem Zustand sind zwar geringfügige Leckagen zu erwarten, die jedoch toleriert werden können, da, wie im mittleren Teil der Figur 2 zu erkennen ist, diese nur in einem kleinen Bereich auftreten, der bei der Verwendung in einer Verbrennungskraftmaschine relativ schnell durchfahren wird. Sobald die Temperatur auf die übliche Betriebtemperatur steigt, wie im rechten Teil der Figur 2 ersichtlich ist, erfolgt durch den höheren Wärmeausdehnungskoeffizienten der Dichtringe 42, 44, 46 eine Verpressung zum Aufnahmegehäuse, da der Durchmesser der Dichtringe 42, 44, 46 stärker wächst als das Aufnahmegehäuse 10, die zu einer erhöhten Dichtwirkung führt. Bei Temperaturen von deutlich unter 0°C ist die Viskosität des Öls so hoch, dass ebenfalls beinahe keine Leckage auftritt, da der Spalt für eine hochviskose Flüssigkeit nicht breit genug ist, wie im linken Teil des Diagramms zu erkennen ist. Selbstverständlich lässt sich durch geschickte Wahl des Materials der Dichtringe 42, 44 der Bereich mit höherer Leckage auch in andere Temperaturbereiche verschieben.

Neben der hohen Abdichtwirkung bei üblichen Betriebstemperaturen wird auf diese Weise auch die Montage des Ventilgehäuses 20 und die Herstellung des Aufnahmegehäuses 10 deutlich vereinfacht. Das Ventilgehäuse 20 wird von der zum ersten axialen Anschlussstutzen 14 entgegengesetzten Seite in das Aufnahmegehäuse 10 eingeführt. Da diese Montage üblicherweise bei Raumtemperatur von etwa 20°C stattfindet, lässt sich das Ventilgehäuse 20 aufgrund der Spiel- oder Übergangspassungen der ringförmigen Erweiterungen 30, 32, 34 und der Dichtringe 42, 44 mit lediglich geringem Widerstand in das Aufnahmegehäuse einschieben. Insbesondere entstehen beim Vorbeigleiten der Dichtringe 42, 44 an den Anschlussstutzen 16, 18 keine Schäden an den Dichtringen 42, 44 und zwar auch dann nicht, wenn das Aufnahmegehäuse 10 nicht weiter von innen bearbeitet wird, um die scharfkantigen Öffnungen der Anschlussstutzen 16, 18 zu glätten. Der dritte Dichtring 46 bildet den einzigen Reibungsumfang zum Aufnahmegehäuse 10, jedoch muss dieser nicht an den Anschlussstutzen 16, 18 vorbeigeführt werden. Entsprechend muss eine etwas höhere Kraft erst am Ende des Einsteckvorgangs aufgebracht werden, ohne befürchten zu müssen, dass Schäden am Dichtring 44 aufgrund von scharfen Kanten entstehen könnten. So wird die Montage einerseits mit reduziertem Kraftaufwand möglich und andererseits wird der Ausschuss aufgrund von Montagefehlern deutlich verringert.

Des Weiteren wird die Gefahr von Verwechslungen verringert und die Anzahl an Gleichteilen aufgrund der konstanten Durchmesser verringert.

Mit dem vorliegenden Strömungsgehäuse lassen sich somit die zulässigen Leckagewerte bei jeder Temperatur einhalten. Gleichzeitig wird eine weitere Bearbeitung des Aufnahmegehäuses eingespart und die Montage erleichtert. Durch die axial kurzen notwendigen Dichtspalte kann zusätzlich der axiale Bauraum begrenzt werden. Hierdurch entstehen auch kürzere Fertigungszyklen der Strömungsgehäuse, so dass die Strömungsgehäuse kostengünstig herstellbar sind.

Es sollte deutlich sein, dass der Schutzbereich des Hauptanspruchs nicht auf das beschriebene Ausführungsbeispiel begrenzt ist. Insbesondere lassen sich die Anzahl und die Lage der vorhandenen Dichtringe und der Anschlussstutzen und Bohrungen je nach Anwendung variieren. Des Weiteren können mehrere Dichtringe zwischen zwei Anschlüssen verwendet werden, wenn dies notwendig ist, um geforderte Leckagewerte einzuhalten. Auch können unterschiedliche Materialien zum Einsatz kommen.

## Patentansprüche

1. Ölventil-Strömungsgehäuse für einen Ölkreislauf einer Verbrennungskraftmaschine mit
einem Aufnahmegehäuse (10), in dem ein Ventilgehäuse (20) in einer Aufnahmebohrung (12) des Aufnahmegehäuses (10) angeordnet ist,
zumindest zwei fluidisch verbindbare Anschlussstutzen (14, 16, 18), die im Aufnahmegehäuse (10) ausgebildet sind und die fluidisch mit einer korrespondierenden Anzahl Bohrungen (22, 24, 26) des Ventilgehäuses (20) verbunden sind,
einer Umfangsfläche (28) am Ventilgehäuse (20), welche axial zwischen den Bohrungen (22, 24, 26) angeordnet ist und an der eine Nut (36, 38, 40) ausgebildet ist
und zumindest einem Dichtring (42, 44, 46), welcher in der Nut (36, 38, 40) an der Umfangsfläche angeordnet ist,
**dadurch gekennzeichnet, dass**
der Dichtring (42, 44) einen höheren Wärmeausdehnungskoeffizienten aufweist als das Aufnahmegehäuse (10), wobei bei der Verwendung in einer Verbrennungskraftmaschine bei Raumtemperatur der Dichtring (42, 44) eine Spiel- oder Übergangspassung zum Aufnahmegehäuse (10) aufweist, so dass keine Verpressung entsteht, und bei Betriebstemperatur der Dichtring (42, 44) zum Aufnahmegehäuse (10) verpresst ist.

2. Ölventil-Strömungsgehäuse für einen Ölkreislauf einer Verbrennungskraftmaschine nach Anspruch 1,
**dadurch gekennzeichnet, dass**
der Außendurchmesser des Dichtrings (42, 44, 46) bei Raumtemperatur dem Innendurchmesser der Aufnahmebohrung (12) des Aufnahmegehäuses (10) entspricht.

3. Ölventil-Strömungsgehäuse für einen Ölkreislauf einer Verbrennungskraftmaschine nach einem der Ansprüche 1 oder 2,
**dadurch gekennzeichnet, dass**
die erste Bohrung (22) und der erste Anschlussstutzen (14) axial an einem Ende des Ventilgehäuses (20) beziehungsweise des Aufnahmegehäuses (10) ausgebildet sind und die zweite Bohrung (24) und der zweite Anschlussstutzen (16) radial verlaufen.

4. Ölventil-Strömungsgehäuse für einen Ölkreislauf einer Verbrennungskraftmaschine nach einem der vorhergehenden Ansprüche,
**dadurch gekennzeichnet, dass**
am Aufnahmegehäuse (10) ein dritter Anschlussstutzen (18) und am Ventilgehäuse (20) eine dritte Bohrung (26) ausgebildet sind, wobei die dritte Bohrung (26) und der dritte Anschlussstutzen (18) radial verlaufen und eine fluidische Verbindung zueinander aufweisen.

5. Ölventil-Strömungsgehäuse für einen Ölkreislauf einer Verbrennungskraftmaschine nach Anspruch 4,
**dadurch gekennzeichnet, dass**
an der Umfangsfläche (28) des Ventilgehäuses (20) eine zweite Nut (38) zwischen der zweiten Bohrung (24) und der dritten Bohrung (26) ausgebildet ist, in der ein zweiter Dichtring (44) angeordnet ist, der einen höheren Wärmeausdehnungskoeffizienten aufweist als das Aufnahmegehäuse (10).

6. Ölventil-Strömungsgehäuse für einen Ölkreislauf einer Verbrennungskraftmaschine nach einem der vorhergehenden Ansprüche,
**dadurch gekennzeichnet, dass**
an der Umfangsfläche (28) des Ventilgehäuses (20) eine dritte Nut (40) mit einem darin angeordneten Dichtring (46) ausgebildet ist, welche an der zur ersten Bohrung (22) entgegengesetzten Seite des Ventilgehäuses (20) angeordnet ist.

7. Ölventil-Strömungsgehäuse für einen Ölkreislauf einer Verbrennungskraftmaschine nach Anspruch 6,
**dadurch gekennzeichnet, dass**
der Durchmesser des in der dritten Nut (40) angeordneten Dichtrings (46) bei Raumtemperatur größer ist als der Innendurchmesser der Aufnahmebohrung (12), so dass der Dichtring (46) einen Presssitz zum Aufnahmegehäuse (10) aufweist.

8. Ölventil-Strömungsgehäuse für einen Ölkreislauf einer Verbrennungskraftmaschine nach einem der vorgehenden Ansprüche,
**dadurch gekennzeichnet, dass**
die Umfangsfläche (28) des Ventilgehäuses (20) drei ringförmige Erweiterungen (30, 32, 34) aufweist, in denen die Nuten (36, 38, 40) ausgebildet sind.

9. Ölventil-Strömungsgehäuse für einen Ölkreislauf einer Verbrennungskraftmaschine nach Anspruch 8,
**dadurch gekennzeichnet, dass**
die ringförmigen Erweiterungen (30, 32, 34) des Ventilgehäuses (20) einen gleichen Außendurchmesser aufweisen und die Aufnahmebohrung (12) des Aufnahmegehäuses (10) einen konstanten Innendurchmesser aufweist.

## Claims

1. A flow casing for an oil valve for an oil circuit of an internal combustion engine, comprising
a supporting housing (10) in which a valve housing (20) is arranged in a supporting bore (12) of the supporting housing (10),
at least two connecting branches (14, 16, 18) each of which is formed in the supporting housing (10) and each of which is configured to be fluidically connectable, and which are fluidically connected with a corresponding number of bores (22, 24, 26) of the valve housing (20),
one peripheral surface (28) arranged on the valve housing (10) axially between the bores (22, 24 26) and in which a groove (36, 38, 40) is formed; and
at least one seal ring (42, 44, 46) arranged in the groove on the peripheral surface (36, 38, 40),
**characterized in that** the seal ring (42, 44) has a thermal expansion coefficient which is higher than the supporting housing (10), wherein, when used in an internal combustion engine at room temperature, the seal ring (42, 44) has a clearance fit or transition fit with respect to the supporting housing (10), so that no pressing occurs, and that, at operating temperature, the seal ring (42, 44) is pressed to the supporting housing (10).

2. The flow casing for an oil valve for an oil circuit of an internal combustion engine as recited in claim 1, **characterized in that**, at room temperature, the outer diameter of the seal ring (42, 44, 46) corresponds to the inner diameter of the supporting bore (12) of the supporting housing (10).

3. The flow casing for an oil valve for an oil circuit of an internal combustion engine as recited in claim 1 or 2, **characterized in that** a first bore (22) and a first connecting branch (14) are axially formed at an end of at least one of the valve housing (20) and the supporting housing (10), and a second bore (24) and a second connecting branch (16) are each configured to extend radially.

4. The flow casing for an oil valve for an oil circuit of an internal combustion engine as recited in one of the preceding claims, **characterized in that** a third connecting branch (18) is formed on the supporting housing (10), and a third bore (26) is formed in the valve housing (10), wherein the third bore (26) and the third connecting branch (18) are configured to extend radially and to comprise a fluidic connection to each other.

5. The flow casing for an oil valve for an oil circuit of an internal combustion engine as recited in claim 4, **characterized in that** a second groove (38) is formed in the peripheral surface (28) of the valve housing (20) between the second bore (24) and the third bore (26), the second groove comprising a second seal ring (44) arranged therein, having a thermal expansion coefficient which is higher than that of the supporting housing (10).

6. The flow casing for an oil valve for an oil circuit of an internal combustion engine as recited in one of the preceding claims, **characterized in that** a third groove (40) with a seal ring (46) arranged therein is formed in the peripheral surface (28) of the valve housing (20), the groove being arranged on the side of the valve housing (20) opposite to the first bore (22).

7. The flow casing for an oil valve for an oil circuit of an internal combustion engine as recited in claim 6, **characterized in that**, at room temperature, the diameter of the seal ring (46) arranged in the third groove (46) is larger than the inner diameter of the supporting bore (12) so that the seal ring (46) provides a press seat to the supporting housing (10).

8. The flow casing for an oil valve for an oil circuit of an internal combustion engine as recited in one of the preceding claims, **characterized in that** the peripheral surface (28) of the valve housing (20) comprises three annular protrusions (30, 32, 34) in which the grooves (36, 38, 40) are formed.

9. The flow casing for an oil valve for an oil circuit of an internal combustion engine as recited in claim 8, **characterized in that** annular protrusions (30, 32, 34) of the valve housing (20) have equal outer diameters and the supporting bore (12) of the supporting housing (10) has a constant inner diameter.

## Revendications

1. Corps d'écoulement pour une soupape d'huile destiné à un circuit d'huile d'un moteur à combustion interne, avec
un boitier de réception (10) dans lequel un boitier de soupape (20) est disposé dans un alésage de réception (12) du boitier de réception (10),
au moins deux tubulures de raccordement (14, 14, 16) aptes à être raccordées fluidiquement, formées dans le boitier de réception (10) et en liaison fluidique avec un nombre correspondant d'alésages (/22, 24, 26) du boitier de soupape (20),
une surface périphérique (28) au boitier de soupape (20), qui est disposée axialement entre les alésages (22, 24, 26) et dans laquelle une rainure (36, 38, 40) est formée,
et au moins une bague (42, 44, 46) disposée dans la rainure (36, 38, 40) dans la surface périphérique (28),
**caractérisé en ce que**
la bague (42, 44) a un coefficient de dilatation thermique plus élevé que celui du boitier de réception (10), ladite bague (42, 44), lorsqu'elle est utilisée dans un moteur à combustion interne à température ambiante, ayant un ajustement avec jeu ou de transition par rapport au boitier de réception (10), de sorte qu'aucun scellement est effectué, et, à température de fonctionnement, ladite bague (42, 44) étant scellée vers le boitier de réception (10).

2. Corps d'écoulement pour une soupape d'huile destiné à un circuit d'huile d'un moteur à combustion interne selon la revendication 1, **caractérisé en ce qu'**à température ambiante, le diamètre extérieur de ladite bague (42, 44, 46) correspond au diamètre intérieur dudit alésage de réception (12) du boitier de réception (10).

3. Corps d'écoulement pour une soupape d'huile destiné à un circuit d'huile d'un moteur à combustion interne selon la revendication 1 ou 2, **caractérisé en ce que** le premier alésage (22) et la première tubulure de raccordement (14) sont formé axialement sur une extrémité du boitier de soupape (20) ou du boitier de réception (10), et le deuxième alésage (24) et la deuxième tubulure de raccordement (16) s'étendent radialement.

4. Corps d'écoulement pour une soupape d'huile destiné à un circuit d'huile d'un moteur à combustion interne selon l'une quelconque des revendications précédentes, **caractérisé en ce qu'**une troisième tubulure de raccordement (18) est formée sur le boitier de réception (10) et un troisième alésage (26) est formé sur ledit boitier de soupape (20), le troisième alésage (26) et la troisième tubulure de raccordement (18) s'étendant radialement et ayant en communication fluidique l'un avec l'autre.

5. Corps d'écoulement pour une soupape d'huile destiné à un circuit d'huile d'un moteur à combustion interne selon la revendication 4, **caractérisé en ce qu'**une deuxième rainure (38) est formée dans la surface périphérique (28) du boitier de soupape (20) entre le deuxième alésage (24) et le troisième alésage (26), une deuxième bague (44) étant disposée dans ladite rainure, qui a un coefficient de dilatation thermique plus élevé que celui du boitier de réception (10).

6. Corps d'écoulement pour une soupape d'huile destiné à un circuit d'huile d'un moteur à combustion interne selon l'une quelconque des revendications précédentes, **caractérisé en ce qu'**une troisième rainure (40) avec une bague (46) disposée là-dedans est formée dans la surface périphérique (28) du boitier de soupape (20), ladite rainure étant disposée au côté du boitier de soupape (20) opposé au premier alésage (22).

7. Corps d'écoulement pour une soupape d'huile destiné à un circuit d'huile d'un moteur à combustion interne selon la revendication 6, **caractérisé en ce qu'**à température ambiante, le diamètre de la bague (46) disposée dans la troisième rainure (40) est plus grand que le diamètre intérieur dudit alésage de réception (12), de sorte que la bague (42) est en ajustement serré par rapport au boitier de réception (10).

8. Corps d'écoulement pour une soupape d'huile destiné à un circuit d'huile d'un moteur à combustion interne selon l'une quelconque des revendications précédentes, **caractérisé en ce que** la surface périphérique (28) du boitier de soupape (20) comprend trois élargissements (30, 32, 34) annulaires dans lesquelles les rainures (36, 38, 40) sont formées.

9. Corps d'écoulement pour une soupape d'huile destiné à un circuit d'huile d'un moteur à combustion interne selon la revendication 8, **caractérisé en ce que** les élargissements (30, 32, 34) annulaires du boitier de soupape (20) ont un diamètre extérieur égal, et l'alésage de réception (12) du boitier de réception (10) a un diamètre intérieur constant.
